# EUROPEAN PATENT SPECIFICATION

(11) **EP 4 632 858 B1**
(45) Date of publication and mention of the grant of the patent: **04.11.2026**
(21) Application number: 25182526.1
(22) Date of filing: 09.07.2019
(51) Int. Cl.: H01M 10/04, H01M 10/0583, H01M 10/0585

(54) **ELECTRODE ASSEMBLY**
ELEKTRODENANORDNUNG
ENSEMBLE D'ÉLECTRODES

(30) Priority: 19.11.2018 KR 20180142344
(43) Date of publication of application: 15.10.2025
(62) Document number(s) of the earlier application(s) in accordance with Art. 76 EPC: 19886921.6 / 3 712 997
(73) Proprietor: LG Energy Solution, Ltd., Seoul 07335 (KR)
(72) Inventor: LEE, Shin Hwa, 34122 DAEJEON (KR); LEE, Woo Yong, 34122 DAEJEON (KR); SUNG, Ki-Eun, 34122 DAEJEON (KR)
(74) Representative: Plasseraud IP

(56) References cited:
- WO-A1-2014/042424
- KR-A- 20170 111 690
- US-A1- 2008 280 208

## Description

### CROSS-REFERENCE TO RELATED APPLICATION

The present application claims the benefit of the priority of Korean Patent Application No. 10-2018-0142344, filed on November 19, 2018.

### TECHNICAL FIELD

The present invention relates to an electrode assembly embedded in a secondary battery, and more particularly, to an electrode having advantages of a lamination & stacking method with a relatively stable structure and advantages of a Z-folding method with a relatively small allowable tolerance.

### BACKGROUND ART

Secondary batteries are rechargeable unlike primarily batteries, and also, the possibility of compact size and high capacity is high. Thus, recently, many studies on rechargeable batteries are being carried out. As technology development and demands for mobile devices increase, the demands for rechargeable batteries as energy sources are rapidly increasing.

Such a secondary battery is configured so that an electrode assembly is built in a battery case (for example, a pouch, a can, and the like). The electrode assembly built in the battery case is repeatedly chargeable and dischargeable because of a structure in which a positive electrode/a separator/a negative electrode are stacked.

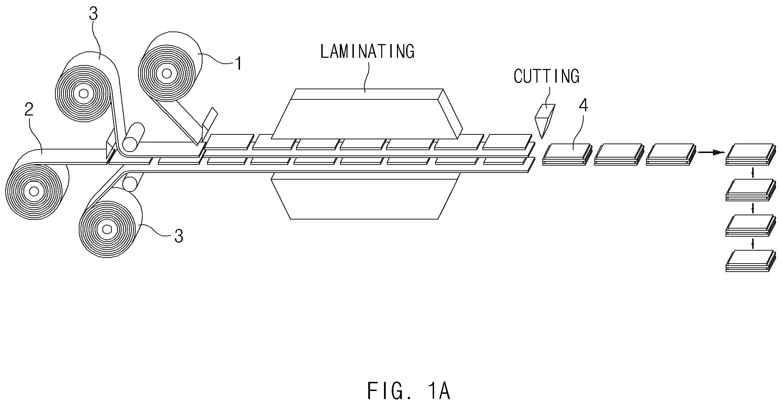

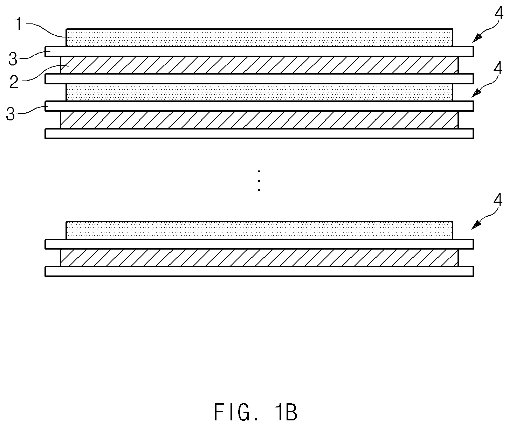

FIG. 1a is a side view illustrating a process of manufacturing a unit cell 4 to be stacked in an electrode assembly through a lamination & stacking process among electrode assemblies according to the related art, and FIG. 1b is a side view illustrating a state in which the plurality of unit cells 4 manufactured in FIG. 1a are stacked.

Referring to the drawings, in the lamination & stacking manner, the positive electrode 1, the separator 3, the negative electrode 2, and the separator 3 are continuously unwound to be supplied in a state of being wound in the form of a roll. Here, each of the positive electrode 1 and the negative electrode 2 is cut by a predetermined size and moved together with separators 3 that are continuously supplied, to pass through a laminating device. Here, the positive electrode 1 has a structure in which a positive electrode active material is applied to a surface of a positive electrode collector, and the negative electrode 2 has a structure in which a negative electrode active material is applied to a surface of a negative electrode collector.

While passing through the laminating device, heat and a pressure may be applied between the positive electrode 1, the separator 3, the negative electrode 2, and the separator 3 to bond the positive electrode 1, the separator 3, the negative electrode 2, and the separator 3 to each other. In the bonded state, the positive electrode 1 and the positive electrode 1, which are adjacent to each other (the negative electrode 2 and the negative electrode 2, which are adjacent to each other), are cut therebetween to continuously manufacture one unit cell 4 in which the positive electrode 1, the separator 3, the negative electrode, and the separator 3 are sequentially stacked downward. The unit cells 4 are stacked in a predetermined number to manufacture an electrode assembly.

Also, the electrode assembly according to the related art may also be manufactured through a Z-folding method. The electrode assembly manufactured through the Z-folding method has a structure in which a positive electrode and a negative electrode alternately inserted at both sides while a continuously supplied separator is provided at a center and then folded in a zigzag shape. Z-folding has been disclosed in KR 10-2014-0062761, KR 10-2011-0048839.

In the lamination & stacking method as described above, since layers to be stacked are bonded to each other, the electrode assembly may have superior durability against an external impact and be stable compared to other manufacturing methods. On the other hand, since the processes are performed in order of stacking of the electrodes and the separator, lamination, cutting, and stacking of the unit cells, the number of processes is greater than that of other processes. On the other hand, in the case of the Z-folding method, a process period is shorter, resulting in higher production rate when compared to the lamination & stacking method.

Furthermore, when the number of processes increases, allowable tolerances for each process may be accumulated. For example, an allowable tolerance in the lamination & stacking method is determined in consideration of, when the electrodes and the separator are stacked, an allowable tolerance when cutting the positive electrode and the negative electrode and an allowable tolerance when cut into the unit cells. As a result, the allowable tolerance in the electrode assembly manufactured through the lamination & stacking method may be reduced. Thus, there is a problem that the size of the positive electrode relative to the negative electrode increases. On the other hand, when the electrode assembly is manufactured in the Z-folding manner, since the number of processes is small, the positive electrode may have a size greater than that of the negative electrode.

That is, since the capacity of the electrode assembly increases as the size of the positive electrode is greater than that of the negative electrode, it is preferable that the size of the positive electrode increases as much as possible. However, the size of the positive electrode is limited to a certain limit to reduce possibility of degradation of the positive electrode and an occurrence of short circuit. Here, the size of the positive electrode is more reduced by the allowable tolerance during the production, but the size of the positive electrode is more limited in the lamination & stacking manner because the number of processes increases (due to the large allowable tolerance).
KR 2017 0111690 A, WO 2014/042424 A1, and US 2008/280208 disclose an electrode assembly formed by a folding unit and a separator.

### DISCLOSURE OF THE INVENTION

### TECHNICAL PROBLEM

Therefore, a main object of the present invention is to provide an electrode assembly having an advantage of an electrode assembly using a Z-folding method (increasing in size of the positive electrode compared to a negative electrode due to reduction of an allowable tolerance) and an advantage of an electrode assembly using a lamination & stacking method (a negative electrode, a separator, and a positive electrode, which constitute a unit cell, are bonded to improve stability).

### TECHNICAL SOLUTION

The present invention for achieving the above object comprises an electrode assembly as defined in the appended set of claims, the electrode assembly in which a positive electrode and a negative electrode are alternately stacked, and a separator is disposed between the positive electrode and the negative electrode, the electrode assembly comprises: a folding unit a negative electrode unit and a positive electrode unit are alternately inserted between layers of the separator of which one side and the other side are alternately folded in a zigzag shape in a direction perpendicular to a direction in which the positive electrode and the negative electrode are stacked; and a stacking unit in which the positive electrode, the separator, and the negative electrode, each of which is cut by a predetermined size, are sequentially stacked, wherein the negative electrode is disposed at the outermost layer of the negative electrode unit, and the positive electrode is disposed at the outermost layer of the positive electrode unit, and the stacking unit is stacked on each of the uppermost layer and the lowermost layer of the folding unit.

Also, the positive electrode, the separator, and the negative electrode, which are stacked in the stacking unit, may be bonded to each other at contact surfaces therebetween. The bonding in the stacking unit may be performed by applying heat and a pressure.

When the stacking unit is stacked on the folding unit, the positive electrode or the negative electrode, which is disposed at the outermost layer of the stacking unit, may be a single-sided electrode in which an active material is applied to only one surface of a collector.

Here, in the single-sided electrode, the active material may be applied to a surface contacting the separator. That is, a positive electrode collector or the negative electrode collector may be disposed at the outermost layer.

In a first embodiment not according to the present invention, the negative electrode unit may be one negative electrode, and the positive electrode unit may be one positive electrode. Also, the negative electrode or the positive electrode may be stacked at the outermost layer of the folding unit, and the separator may be stacked on a layer of the stacking unit, which contacts the folding unit.

In this embodiment, the stacking unit may be a monocell in which one positive electrode, one negative electrode, and two separators are stacked, wherein one of the separators may be stacked between the positive electrode and the negative electrode, and the other one may be stacked at a position contacting the outermost layer of the folding unit.

In a second embodiment not according to the present invention, the separator may be stacked on the outermost layer of the folding unit, and the stacking unit may be a monocell in which one positive electrode, one negative electrode, and one separator are stacked, wherein the separator may be stacked between the positive electrode and the negative electrode.

In a third embodiment not according to the present invention, the negative electrode or the positive electrode may be stacked at one of the outermost layers of the folding unit, and the separator may be stacked at the other one of the outermost layers, the stacking unit stacked on one of the outermost layers, at which the positive electrode or the negative electrode is stacked, may be a monocell in which one positive electrode, one negative electrode, and two separators are stacked, wherein one of the separators may be stacked between the positive electrode and the negative electrode, and the other one may be stacked at a position contacting the outermost layer of the folding unit, and the stacking unit stacked on one of the outermost layers, at which the separator is stacked, may be a monocell in which one positive electrode, one negative electrode, and one separator are stacked, wherein the separator may be stacked between the positive electrode and the negative electrode.

In the foregoing embodiments, the separator stacked between the negative electrode unit and the positive electrode unit in the folding unit has a thickness different from that of the separator stacked within the stacking unit.

Furthermore, the negative electrode unit is a bicell in which the negative electrode is stacked at each of both the outermost layers, and one or more positive electrodes are stacked between the negative electrodes, and the positive electrode unit is a bicell in which the positive electrode is stacked at each of both the outermost layers, and one or more negative electrode are stacked between the positive electrodes. In more detail, the negative electrode unit is a bicell in which the negative electrode/the separator/the positive electrode/the separator/the negative electrode are stacked sequentially from the outermost layer, and the positive electrode unit is a bicell in which the positive electrode/the separator/the negative electrode/ the separator/the positive electrode are stacked sequentially from the outermost layer. Here, the positive electrode, the separator, the negative electrode, which are stacked to constitute each of the negative electrode unit and the positive electrode unit, may be bonded to each other at contact surfaces therebetween.

Also, the separator stacked between the negative electrode unit and the positive electrode unit in the folding unit has a thickness different from that of the separator stacked within the negative electrode unit and the positive electrode unit.

Also, in the stacking unit, the separator may be stacked at the outermost layer at an opposite side of a direction in which the stacking unit faces the folding unit.

Furthermore, a stacking unit in which the positive electrode, the separator, the negative electrode, each of which is cut by a predetermined size, are sequentially stacked is additionally stacked on an outer surface of the stacking unit. In the stacking unit, the stacking units disposed at the upper and lower portions of the folding unit may have the same stacking structure, and more or fewer electrodes are stacked according to specification of the electrode assembly.

Also, as necessary , two or more folding units may be continuously stacked between the stacking units disposed at the uppermost layer and the lowermost layer. Here, the stacking unit in which the positive electrode, the separator, the negative electrode, each of which is cut by a predetermined size, may be sequentially stacked is inserted between the two folding units that are continuously stacked. The stacking unit 200 may be a bicell in which the uppermost layer and the lowermost layer have the same polarity or a monocell in which the uppermost layer and the lowermost layer have polarities different from each other and may have the same structure as the stacking unit disposed each of the upper and lower portions of the folding unit.

Furthermore, the negative electrode unit stacked on the folding unit may be one negative electrode, and the positive electrode unit may be one positive electrode, the negative electrode may have an area greater than that of the positive electrode, and a gas (d) between a point at which the separator is folded and the negative electrode may be less than that between the point at which the separator is folded and the positive electrode.

Also, in the folding unit, an end of the separator may comprise an extension part extending by a predetermined length, and the extension part may surround the folding unit and the stacking units after the stacking units are stacked on upper and lower portions of the folding unit, and an end of the extension part may be bonded to be fixed to a surface of the folding unit or the stacking unit.

Furthermore, as the electrode assembly having the above technical features is provided, the present invention may additionally provide a secondary battery in which the electrode assembly according to the present invention is embedded in the pouch and a secondary battery module in which a plurality of secondary batteries are electrically connected to each other.

### ADVANTAGEOUS EFFECTS

According to the present invention having the above-described configuration, the folding unit having the Z-folding structure (having a structure of the electrode assembly manufactured in the Z-folding manner) and the stacking unit having a lamination & stacking structure (having a structure of the electrode assembly manufactured in the lamination &stacking method) may be bonded to each other. Thus, the positive electrode may increase in area relative to the negative electrode in the folding unit to increase in capacity, and the stacking unit may be disposed on the outermost layer of the folding unit to improve stability.

Furthermore, the positive electrode or the negative electrode, which is disposed at the outermost layer of the stacking unit, may be provided as the single-sided electrode in which the active material is applied to only one surface of the collector to reduce the degradation due to the precipitation of the active material and also reduce the possibility of occurrence of the short circuit due to the external impact.

Also, the separator stacked between the negative electrode unit and the positive electrode unit in the folding unit has a thickness different from that of the separator stacked within the stacking unit to minimize the volume.

The present invention may provide the structure in which the separator is stacked at the outermost layer at an opposite side of a direction in which the stacking unit faces the folding unit and the structure in which the plurality of stacking units are additionally stacked to provide the various structures according to the required specification of the secondary battery.

Two or more folding units may be continuously stacked. That is, when the stacking number of folding unit increases, the cumulative tolerance may increase. Thus, two folding units, each of which has less stacking number, may be stacked to reduce the cumulative tolerance, and also, the stacking number may increase to increase in capacity.

Also, in the folding unit, the end of the separator may comprise the extension part extending by a predetermined length, and the extension part may surround the folding unit and the stacking units after the stacking units are stacked on the upper and lower portions of the folding unit, and the end of the extension part may be bonded to be fixed to the surface of the folding unit or the stacking unit, thereby preventing the shaking of the folding unit and the stacking unit and improving the durability against the external impact.

Furthermore, the present invention may additionally provide a secondary battery in which the electrode assembly according to the present invention is embedded in the pouch and a secondary battery module in which a plurality of secondary batteries are electrically connected to each other.

### BRIEF DESCRIPTION OF THE DRAWINGS

FIG. 1a is a side view illustrating a state in which unit cells are manufactured in a lamination & stacking manner.
FIG. 1b is a front view illustrating a state in which the unit cells manufactured in FIG. 1a are stacked to manufacture an electrode assembly.
FIG. 2 is a front view illustrating a process of manufacturing an electrode assembly according to a first embodiment of the present invention.
FIG. 3 is a front view illustrating a process of manufacturing an electrode assembly according to a second embodiment of the present invention.
FIG. 4 is a front view illustrating a process of manufacturing an electrode assembly according to a third embodiment of the present invention.
FIG. 5a is a front view illustrating a process of manufacturing an electrode assembly according to a fourth embodiment of the present invention.
FIG. 5b is a front view illustrating a process of manufacturing an electrode assembly derived from the fourth embodiment of the present invention.
FIG. 6 is a front view illustrating a process of manufacturing an electrode assembly according to a fifth embodiment of the present invention.
FIG. 7 is a front view illustrating a process of manufacturing an electrode assembly according to a sixth embodiment of the present invention.
FIGS. 8 and 9 are front views illustrating a process of manufacturing an electrode assembly according to a seventh embodiment of the present invention.
FIG. 10 is a front view illustrating a gap 'd' d between a point at which a separator is folded and a negative electrode in a folding unit.
FIG. 11 is a front view illustrating a process of manufacturing an electrode assembly according to an eighth embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly illustrate the present invention, parts that are not related to the description are omitted, and the same or similar components are denoted by the same reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to an electrode assembly in which a positive electrode 10 and a negative electrode 20 are alternately stacked, and separators 30 and 40 are disposed between the positive electrode 10 and the negative electrode 30. The electrode assembly has a structure in which a stacking unit 200 manufactured in the lamination & stacking manner is stacked on each of both sides (upper and lower sides) of a folding unit 100 manufactured in a Z-folding manner.

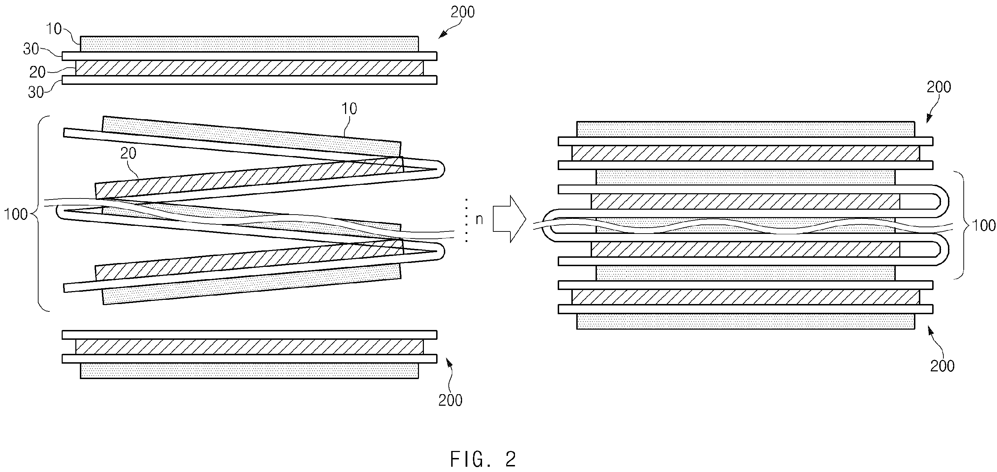

That is, in the folding unit 100, a positive electrode unit and a negative electrode unit are alternately inserted between layers of a separator 40 of which one side and the other side are folded in a zigzag shape in a direction (a horizontal direction in FIG. 2) perpendicular to a direction (a vertical direction in FIG. 2) in which the positive electrode 10 and the negative electrode 20 are stacked.

Here, the negative electrode unit in which the negative electrode is disposed at each of the outermost layers (the uppermost layer and the lowermost layer) and the positive electrode unit in which the positive electrode is disposed at each of the outermost layers are cells that constitutes individual electrodes or individual units.

Also, the stacking unit has a structure in which the positive electrode 10, the separator 30, and the negative electrode 20, each of which is cut to a predetermined size, are sequentially stacked. The positive electrode 10, the separator 30, and the negative electrode 20, which are stacked in the stacking unit, are bonded to each other at contact surfaces therebetween by heat and a pressure. The stacking unit has a structure in which one separator 30 is further added when the negative electrode 20 and the positive electrode 10 are disposed at the outermost layers of the folding unit 100.

Furthermore, when the stacking unit 200 is stacked on each of the upper and lower layers of the folding unit 100, the positive electrode or the negative electrode, which is disposed at the outermost layer of the stacking unit 200, is a single-sided electrode in which an active material is applied to only one surface of a collector. The single-sided electrode disposed at the outermost layer is disposed so that the active material is applied to a surface contacting the separator (so that a positive electrode collector or a negative electrode collector is disposed at the outermost layer).

Hereinafter, embodiments according to the present invention will be described with reference to the accompanying drawings.

### First Embodiment (Not covered by the present invention)

FIG. 2 is a front view illustrating a process of manufacturing an electrode assembly according to a first embodiment of the present invention. As illustrated in the drawing, in a folding unit according to this embodiment, a negative electrode is one individual negative electrode 20, and a positive unit is one individual positive electrode 10.

Also, a stacking unit is a monocell in which one positive electrode 10, one negative electrode 20, and two separators 30 are stacked. In the stacking unit, one of the separators 30 is stacked between the positive electrode 10 and the negative electrode 20, and the other one is stacked at a position contacting the positive electrode 10 disposed at the outermost layer of the folding unit 100. That is, in the stacking unit, the positive electrode 10/the separator 30/the negative electrode 20/the separator 30 are stacked sequentially from the outermost layer.

In this embodiment, although the positive electrode 10 is stacked at the outermost layer of the folding unit 100 and the outermost layer of the stacking unit 200, the present invention is not limited thereto. For example, the negative electrode 20 may be stacked at the outermost layer of the folding unit 100 and the outermost layer of the stacking unit 200.

The folding unit 100 has a structure in which n electrodes (the sum of the number of stacked positive and negative electrodes) are stacked, where n is a natural number greater than at least 2. In this embodiment, the stacking unit 200 is stacked on each of upper and lower layers of the folding unit 100 in which the positive electrode 10 is disposed at each of the uppermost and lowermost layers. Here, the stacking unit 200 is stacked so that a surface thereof, on which the separator is disposed, contacts the outermost positive electrode 10 of the folding unit 100.

This embodiment is an embodiment having the most basic stacking structure in the present invention. Thus, second to fourth embodiments to be described later may have structures in which the structure according to the first embodiment is modified, but have the same technical idea as the first embodiment in that the stacking unit 200 is additionally stacked on both sides of the folding unit 100.

### Second Embodiment (Not covered by the present invention)

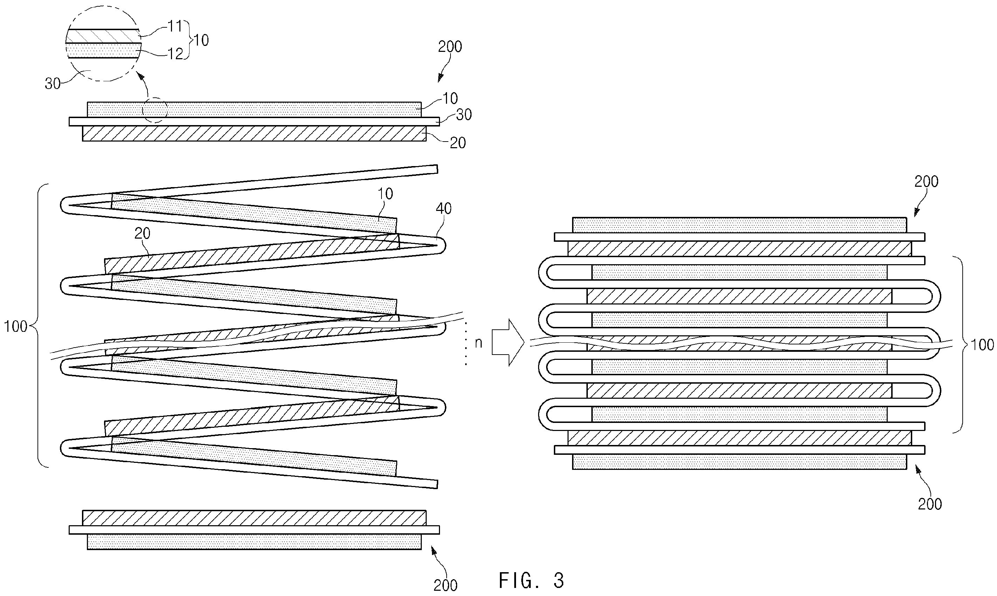

FIG. 3 is a front view illustrating a process of manufacturing an electrode assembly according to a second embodiment of the present invention. In this embodiment, a separator 40 is stacked at the outermost layer of a folding unit 100 (unlike the first embodiment, an electrode is not stacked at the uppermost layer when a positive electrode and a negative electrode are alternately inserted to both sides of a separator of a folding unit).

Also, a stacking unit 200 additionally stacked on each of upper and lower layers of the folding unit 100 is provided as a monocell in which one positive electrode 10, one negative electrode 20, and one separator 300 are stacked.

As illustrated in the drawing, since the electrode disposed at the outermost layer of the folding unit 100 is the positive electrode 10, the stacking unit 200 is stacked in a direction in which the negative electrode 20 faces the folding unit 100.

### Third Embodiment (Not covered by the present invention)

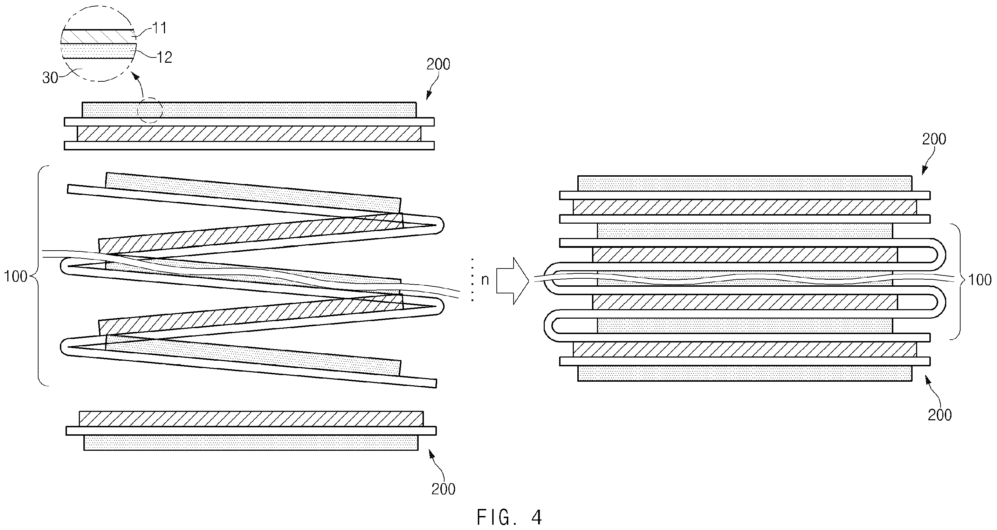

FIG. 4 is a front view illustrating a process of manufacturing an electrode assembly according to a third embodiment of the present invention. In this embodiment, a positive electrode 10 is stacked at the uppermost layer of outermost layers of a folding unit 100, and a separator 40 is disposed at the lowermost layer.

Also, a stacking unit 200 stacked on an upper side of the folding unit 100 has a monocell structure in which a positive electrode 10/a separator 30/a negative electrode 20/a separator 30 are stacked sequentially from the outermost layer (uppermost layer), like the first embodiment. Also, the stacking unit 200 stacked on a lower side of the folding unit 100 is provided as a monocell in which one positive electrode 10, one separator 30, and one negative electrode 20 are stacked, like the second embodiment. Here, the negative electrode 20 faces an upper side.

### Fourth Embodiment

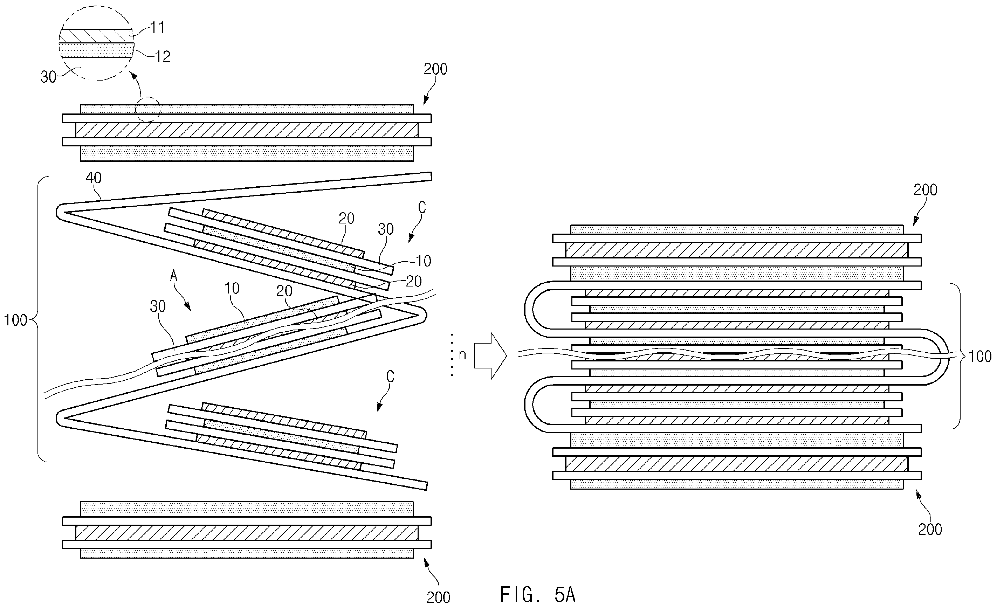

FIG. 5a is a front view illustrating a process of manufacturing an electrode assembly according to a fourth embodiment of the present invention.

In this embodiment, each of a positive electrode unit and a negative electrode unit is provided as a bicell C (a C type bicell in which a positive electrode is disposed at an intermediate layer) in which a plurality of electrodes are stacked instead of individual electrodes. That is, the negative electrode unit is a bicell C in which a negative electrode 20 is tacked on both the outermost layers, and one or more positive electrodes 10 are stacked between the negative electrodes 20, and the positive electrode unit is a bicell A (an A type bicell in which the negative electrode is stacked at an intermediate layer) in which the positive electrode 10 is stacked on both the outermost layer, and one or more negative electrodes 20 are stacked between the positive electrodes 10.

In more detail, as illustrated in the drawing, the positive electrode unit is the A type bicell in which the positive electrode 10/the separator 30/the negative electrode 20/the separator 30/the positive electrode 10 are stacked sequentially from the outermost layer, and the negative electrode unit is the C type bicell in which the negative electrode 20/the separator 30/the positive electrode 10/the separator 30/the negative electrode 20 are stacked sequentially from the outermost layer.

Here, the positive electrode 10, the separator 30, the negative electrode 20, which are stacked to constitute each of the negative electrode unit and the positive electrode unit, are bonded to each other at contact surfaces therebetween. Each of the negative electrode unit and the positive electrode unit is configured so that three electrodes are stacked, but the present invention is not limited thereto. For example, five, seven or more electrodes may be stacked.

The folding unit 100 is configured so that the separator 40 is disposed at the uppermost layer and the lowermost layer. Also, the stacking unit 200 stacked on each of the upper side and the lower side of the folding unit 100 is provided as the bicell (more specifically, the A type bicell). That is, in the bicells stacked at the outermost layer of the folding unit 100, the negative electrode 20 is disposed at the outermost layer. Also, the stacking unit 200 has the bicell structure in which the positive electrode 10 is disposed on the surface contacting the folding unit 100. Here, in the stacking unit 200, although three electrodes are stacked in the drawing, the present invention is not limited thereto. For example, five, seven or more electrodes may be stacked.

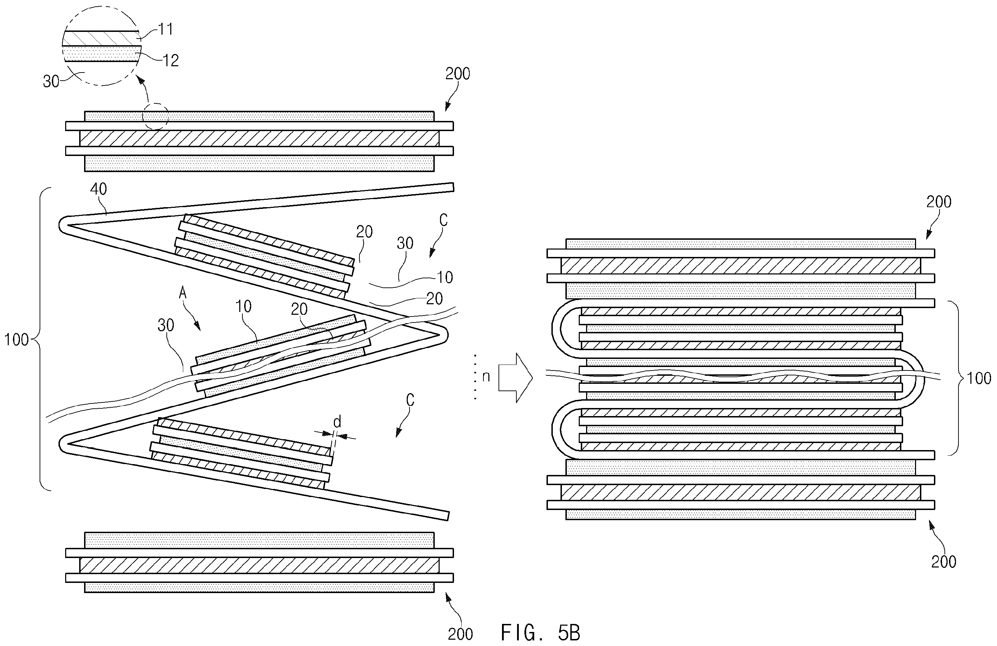

Furthermore, FIG. 5B illustrates a state in which a difference in area between the separator and the negative electrode is not generated or is small in the electrode assembly according to the fourth embodiment. Referring to the drawings, in each of the bicell A constituting the negative electrode unit and the bicell A constituting the positive electrode unit, which are illustrated in FIG. 5a, the separator 40 has the widest area, followed by the negative electrode 20 having the widest area, and the positive electrode 10 has the smallest area. On the other hand, in the bicell C and the bicell A, which are illustrated in FIG. 5b, the negative electrode 20 has an area equal to or slightly less than that of the separator 30 (in more detail, a difference 'd' in length between the negative electrode and the separator, which are illustrated in FIG. 5b, corresponds to about 0 to 0.3% of the length of the separator).

As described above, if the difference in area between the negative electrode 20 and the separator 30 is not generated or is reduced, the area of the negative electrode 20 may more increase compared to the structure in which the separator has an area greater than that of the negative electrode as illustrated in FIG. 5a, under the condition in which the electrode assembly have the same volume. As a result, the positive electrode 10 may also increase in area to increase in charging and discharging capacity. Also, since measurement accuracy of a sensor (vision sensor) is improved during the production process (because there is no portion covered by the separator having a length greater than that of the negative electrode), a size and relative position of the negative electrode 20 may be more accurately grasped to reduce a production tolerance. When the tolerance is reduced as described above, the negative electrode may increase in size.

Although according to the invention the positive electrode unit and the negative electrode unit are provided as the C type bicell and the A type bicell in this embodiment, the present disclosure is not limited thereto. For example, each of the positive electrode and the negative electrode may be provided as a monocell in which the uppermost electrode and the lowermost electrode are different from each other (for example, a cell in which a positive electrode/a separator/a negative electrode/a separator, a positive electrode/a separator/a negative electrode/a separator/a positive electrode/a separator/a negative electrode, a negative electrode/a separator/a positive electrode, a negative electrode/a separator/a positive electrode/a separator/a negative electrode/a separator/a positive electrode, or the like are stacked sequentially downward. Also, even though provided as the monocell, it is preferable that a difference in area between the separator 30 and the negative electrode 20 is minimally generated as possible due to the above-described reason. That is, the negative electrode may have a size of 99.7% to 100% of the size of the separator.

Although the coupling structure of the folding unit 100 and the stacking unit 200 has been described according to the first to fourth embodiments of the present invention, if the coupling structure has a structure in which the negative electrode unit and the positive electrode unit are inserted into the separator 40 while the separator 40 is folded in the zigzag shape, the structure may be applied to the folding unit 100 of the present invention, and if the coupling structure has a structure in which the electrodes 10 and 20 and the separator 30 are sequentially stacked, the structure may be applied to the stacking unit 200 of the present invention. In addition to the foregoing embodiments, more various combinations may be possible.

For reference, the electrode assemblies according to the first to fourth embodiments may be manufactured by a plurality of applicable manufacturing methods. Here, it is preferable that the stacking unit 200 is stacked on each of the upper and lower layers of the folding unit 100, and then, heat and a pressure are applied between the folding unit 100 and the stacking unit 200 to generate predetermined bonding force. That is, the bonding force between the folding unit 100 and the stacking unit 200 may prevent the folding unit 100 and the stacking unit 200 from being separated from each other when the electrode assembly is embedded in a pouch as well as wen an external impact is applied in the pouch. Such the bonding may be generated by thermocompression of the separator when predetermined heat and pressure are applied in the vertical direction (the stacking direction) after the folding unit 100 and the stacking unit 200 are completely stacked.

One of the reasons in which the stacking unit 200 is stacked on the outer surface of the folding unit 100 in the present invention is because the single-sided electrode is easily disposed on the outermost layer in the electrode assembly. That is, in order that the single-sided electrode is disposed at the outermost layer of the folding unit 100 without the additional stacking of the stacking unit 20, a device for separately inserting the single-side electrode in addition to a device for sequentially inserting the negative electrode unit and the positive electrode unit from left and right sides is required. However, the device for separately inserting the single-sided electrode may interfere with the device for inserting the negative electrode unit and the positive electrode unit, and a production time may increase because the single-sided electrode is separately inserted. On the other hand, like the structure according to the present invention, the structure in which the stacking unit 200 is added to the outer surface (the single-sided electrode is stacked on the outermost layer) of the folding unit 100, which are individually manufactured, may have an advantage of simplifying the manufacturing process. Also, since the stacking unit has s structure in which the plurality of electrodes and the separator are bonded to each other therebetween and has a thickness thicker than that of the single-sided electrode, the stacking unit may be more stably and efficiently stacked compared to the case in which only the single-sided electrode is stacked in the manufacturing process. For example, since the single-sided electrode has a thickness thinner than that of a single positive or negative electrode, a stacking speed may be limited to prevent the electrode from being damaged. However, the stacking unit may have a relatively free advantage in constraint condition.

As described above, when the electrode (the positive electrode or the negative electrode) stacked at the outermost layer is the single-sided electrode rather than the double-sided electrode, degradation of the electrode due to precipitation of the active material may be reduced, and the possibility of occurrence of the short circuit due to the external impact may be reduced.

Thus, in the present invention, the electrode (the positive electrode in FIG. 5) disposed at the outermost layer of the stacking unit 200 is provided as the single-sided electrode. That is, as illustrated in FIG. 5, the positive electrode disposed at the outermost layer of the stacking unit 200 is provided as the single-sided electrode in which the positive electrode active material 12 is applied on only a surface of the positive electrode collector, which faces the separator 1, and the positive electrode active material 12 is not applied to a surface that is exposed to the outside.

As described above, the structure in which the single-sided electrode is disposed at the outermost layer of the stacking unit 200 may be applied to the first to third embodiments in addition to the fourth embodiment.

Furthermore, in the present invention, the separator 40 stacked between the negative electrode unit and the positive electrode unit in the folding unit has a thickness different from that of the separator 30 stacked within the stacking unit 200 and that of the separator 30 stacked within the bicell when each of the negative electrode unit and the positive electrode unit is provided as the bicell. That is, since the separator 40 receives an external force during the folding in the manufacturing process, the separator 40 has a thicker thickness or be made of a material having higher durability.

In the present invention, as the electrode assembly having the above technical features is provided, a secondary battery in which the electrode assembly having the above-described structure is embedded in the pouch and a secondary battery module in which a plurality of secondary batteries are mounted to be electrically connected to each other may be additionally provided.

In the present invention having the above structure, since the folding unit 100 having the Z-folding structure and the stacking unit 200 having the lamination & stacking structure are coupled to each other, the positive electrode may increase in size to increase in capacity compared to the negative electrode in the folding unit 100 (that is, as described above, since an allowable tolerance according to the production process, which is a factor that the size of the positive electrode has to be reduced in the state in which the negative electrode has a fixed size, is minimized, the size of the positive electrode is set to a maximum value considering the allowable tolerance), and since the stacking unit 200, in which the electrodes disposed at the outermost layers of the folding unit 100 and the separator are bonded to each other, is provided to improve stability (that is, an effect of increasing in size of the positive electrode relative to the negative electrode due to the reduction of the allowable tolerance, which is the advantage of the Z-folding type electrode assembly and an effect of increasing in stability, which is an advantage of the lamination & stacking type electrode assembly, may be realized at the same time.

Furthermore, the positive electrode 10 or the negative electrode 20, which is disposed at the outermost layer of the stacking unit 200, may be provided as the single-sided electrode in which the active material is applied to only one surface of the collector to reduce the degradation and also reduce the possibility of occurrence of the short circuit due to the external impact.

The present invention may be easily applied to the electrode assembly having the Z-folding structure according to the related art by only adding the stacking unit 200 and provide the structure in which the single-sided electrode is easily disposed at the outermost layer.

Also, the thickness of the separator 40 stacked between the negative electrode unit and the positive electrode unit in the folding unit 100 and the thickness of the separator 40 stacked within the stacking unit is different from each other to minimize the volume of the electrode assembly.

Furthermore, in the present invention, structures according to fifth to eighth embodiments are additionally provided as structures that are applicable to the electrode assemblies according to the first to fourth embodiments.

### Fifth Embodiment

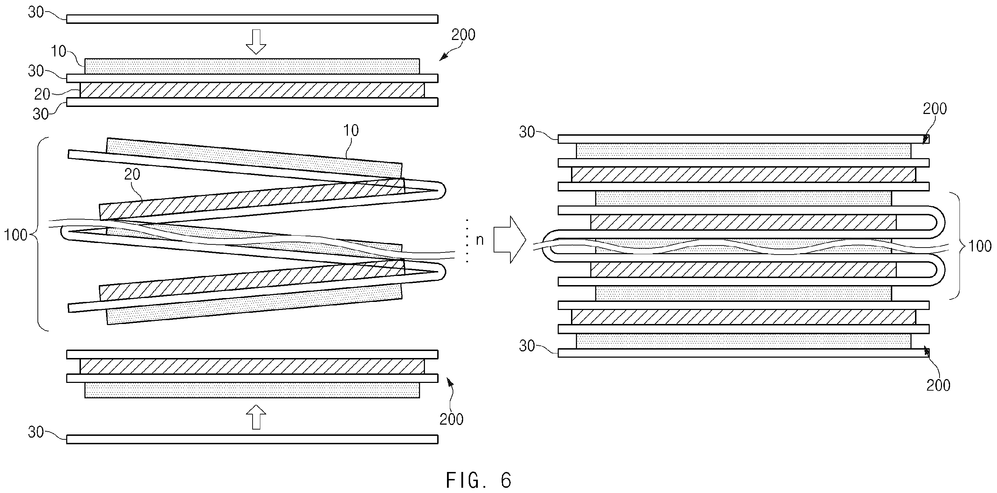

FIG. 6 is a front view illustrating a process of manufacturing an electrode assembly according to a fifth embodiment of the present invention.

This embodiment is characterized in that a separator is additionally stacked on the outermost layers (the uppermost layer and the lowermost layer) of the electrode assemblies according to the foregoing embodiments.

That is, in the electrode assemblies according to the first to fourth embodiments, when the electrodes 10 and 20 are disposed at the outermost layers and then are inserted into the pouch, the electrodes 10 and 20 may directly contact an inner wall of the pouch.

In general, the pouch is made of a material containing a metal components (aluminum, etc.) although the material is changed according to the types of pouch. Thus, when the electrode assembly is inserted into the pouch, the separator stacked at the outermost layer may protect the electrode assembly against chemical changes or external impacts.

### Sixth Embodiment

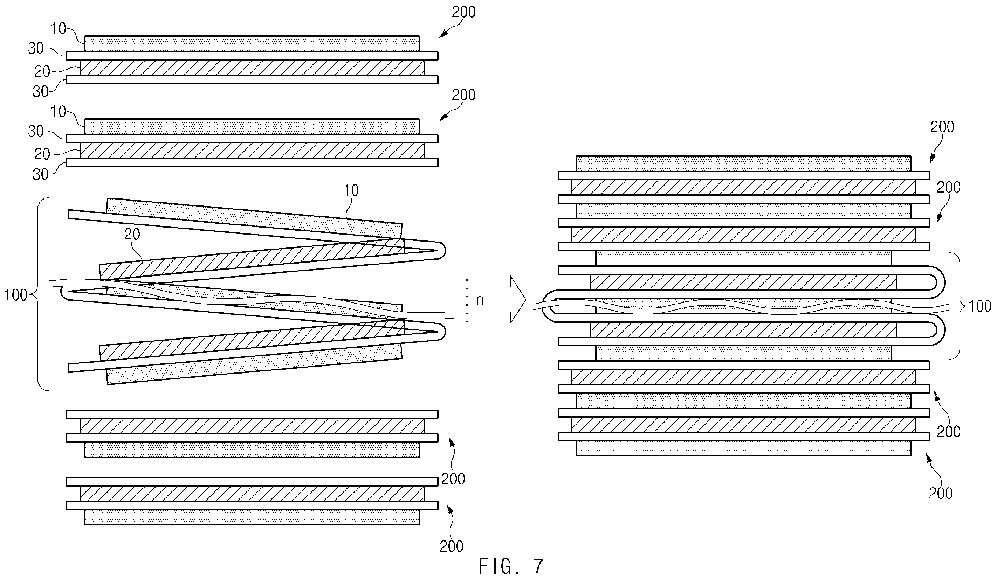

FIG. 7 is a front view illustrating a process of manufacturing an electrode assembly according to a sixth embodiment of the present invention.

This embodiment has a structure in which an auxiliary cell in which a positive electrode 10, a separator 30, and a negative electrode 20, each of which is cut to a predetermined size, are sequentially stacked, is additionally stacked at the outermost layers (the uppermost layer and the lowermost layer) of each of the electrode assemblies according to the forgoing embodiments.

The auxiliary cell may have a structure in which a separator/a negative electrode/a separator are bonded to each other. Alternatively, as illustrated in FIG. 7, the auxiliary cell may have the same structure as the stacking unit 200, i.e., have a structure in which a positive electrode/a separator/a negative electrode/a separator are bonded to each other. Also, in addition, more or fewer electrodes and the structure in which the separator is stacked may be provided according to specification of the electrode assembly.

### Seventh Embodiment

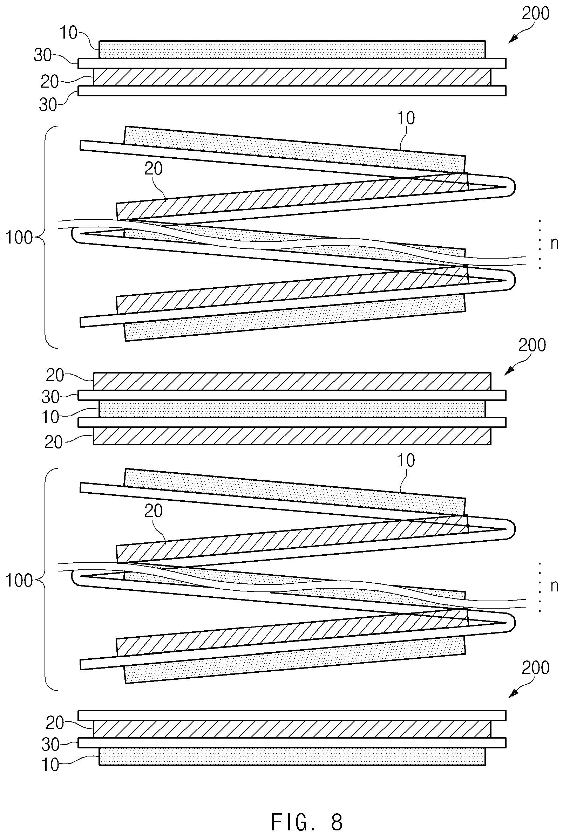

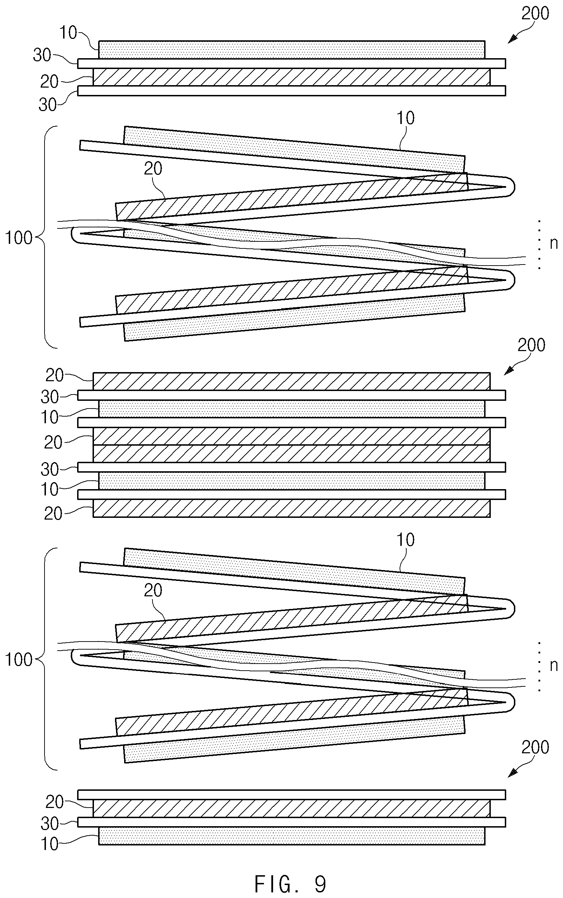

FIGS. 8 and 9 are front views illustrating a process of manufacturing an electrode assembly according to a seventh embodiment of the present invention.

In this embodiment, two or more folding units 100 are sequentially stacked between the stacking units 200 disposed at the uppermost layer and the lowermost layer of the electrode assembly according to the foregoing embodiments.

In the Z-folding manner, when the number of stacked layers increases, the cumulative tolerance may increase. Thus, even if the folding unit 100 has the same stacking number, the cumulative tolerance may be reduced in a structure, in which two folding units, each of which has the same stacking number, are separately manufactured and then be bonded to each other, rather than one folding unit having more stacking number. Thus, in the structure according to this embodiment, two folding units, each of which has less stacking number, may be stacked to reduce the cumulative tolerance, and also, the stacking number may increase to increase in capacity.

Here, one or more stacking units 200, each of which has a structure in which a positive electrode, a separator, and a negative electrode, each of which is cut to a predetermined size, are sequentially stacked, are additionally inserted between the two folding units 100 that are continuously stacked (see FIG. 9). Each of the stacking units 200 may have a bicell in which the uppermost layer and the lowermost layer have the same polarity or a monocell in which the uppermost layer and the lowermost layer have polarities different from each other according to the polarity of the outermost electrode of the folding unit 100. Alternatively, the stacking unit 200 may have a structure in which the bicell and the monocell are combined with each other or a structure in which a plurality of specific monocells or bicells are combined and stacked with each other.

In some cases, the structure of the stacking unit 200 stacked between the two folding units 100 and the structure of the stacking unit 200 stacked at the upper and lower layers of the folding units 100 may be completely the same.

It is preferable that the negative electrode 20 and the positive electrode 10 are manufactured so that a gap d between each of the negative electrode 20 and the positive electrode 10 and a point at which the separator 40 is folded becomes zero or be close to zero as possible to reduce the cumulative tolerance and prevent drooping or wrinkles of the separator 40 from occurring.

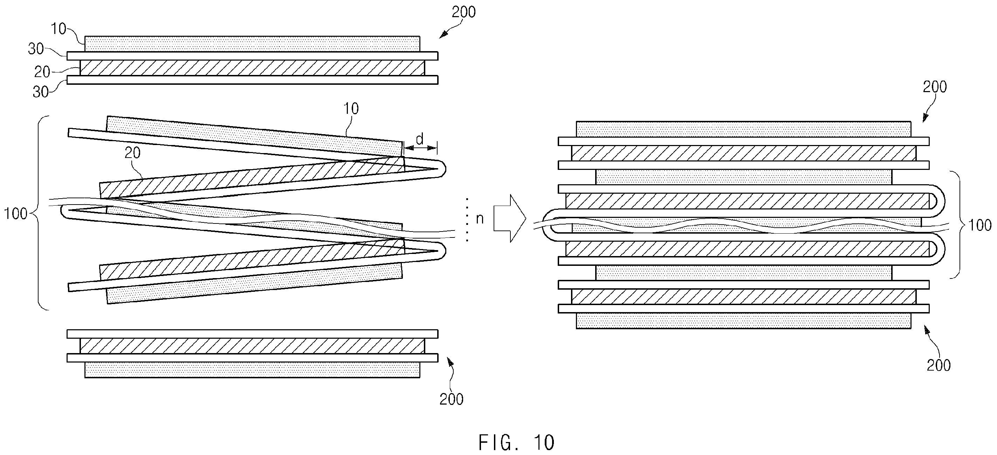

That is, referring to FIG. 10, which illustrates a gap d between a point at which the separator 40 is folded and the negative electrode, the negative electrode unit stacked in the folding unit 100 is one negative electrode 20, and the positive electrode unit stacked in the folding unit 100 is one negative electrode 10. In the drawing, the gap d between the point at which the separator 40 is folded and the negative electrode is greater than zero due to the thickness of the negative electrode 20. However, since each of the negative electrode 20 and the separator 40 has an actually sufficient thin thickness, and the separator 40 has elasticity, the gap d between the folding point and the negative electrode 20 may be zero or close to zero (an end side of the negative electrode 20 is disposed to contact the point at which the separator is folded).

Here, since the gap d generated in the negative electrode 20 becomes zero, the negative electrode 20 may have a maximum area when the electrode assembly has the same volume. As the area of the positive electrode 20 increases (which is less than that of the negative electrode and has to be reduced by an allowable tolerance), the positive electrode 10 may also increase in area. Thus, as the gap d generated in the negative electrode 20 is close to zero, the area of the positive electrode 10 increases to increase in capacity. As a result, it is preferable that the folding unit according to the present invention is manufactured so that the gap d between the point at which the separator is folded and the negative electrode 20 is zero or close to zero.

### Eighth Embodiment

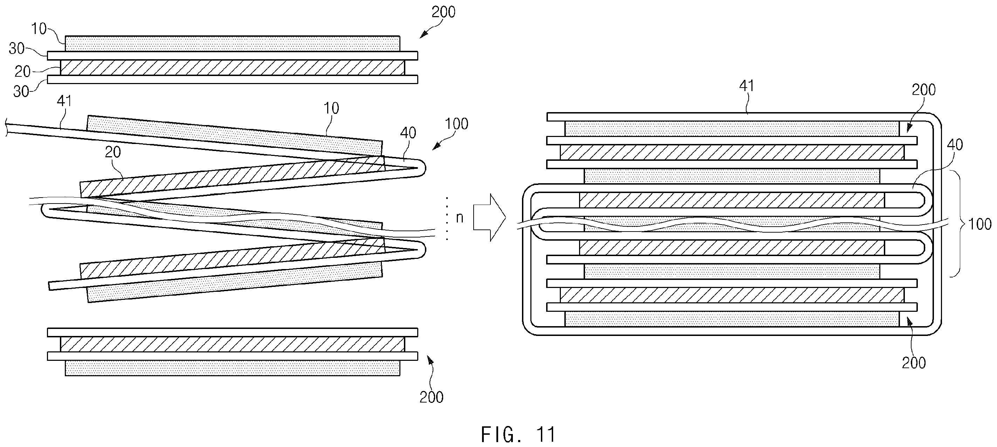

FIG. 11 is a front view illustrating a process of manufacturing an electrode assembly according to an eighth embodiment of the present invention.

This embodiment is characterized in that one end of the separator 40 in the folding unit 200 has an extension part 41 extended by a predetermined length.

As illustrated in the drawing, the extension part 41 may surround the folding unit 100 and the stacking units 200 after stacking units 100 are respectively stacked on the upper and lower portions of the folding unit 100, and an end of the extension part 41 may be bonded to be fixed to a surface of the folding unit 100 or the stacking unit 200.

FIGS. 6 to 11 illustrate only the state in which the features according to the sixth to eighth embodiments are applied to the electrode assembly according to the first embodiment. However, the features according to the sixth to eighth embodiments may be applied to the electrode assemblies according to the second to fourth embodiments in addition to the first embodiment.

The present invention may provide a structure in which the separator 30 is stacked at the outermost layer at an opposite side of a direction in which the stacking unit 200 faces the folding unit 100 and a structure in which the auxiliary cell is additionally stacked on the outer surface of the stacking unit 200. That is, the present invention may provide various structures according to the required specification of the secondary battery.

Two or more folding units 100 may be continuously stacked to reduce the cumulative tolerance, and the stacking number may increase to increase in capacity.

Also, in the folding unit 100, one end of the separator 40 may have the extension part 41 that is extended by the predetermined length. Also, the extension part 41 may surround the folding unit 100 and the stacking units 200, and an end of the extension part 41 may be bonded to be fixed to the surface of the folding unit 100 or the stacking unit 200 to prevent shaking and improve the durability against the external impact. In addition, when a tape is additionally adheres to fix the electrode assembly, the entire structure may be surrounded by the separator. Thus, a taping operation may be easily performed, and a taping method may be variously performed. For example, according to eighth embodiment, the extension part 41 of the separator 40 surrounds the entire structure, and then, the tap for enhancing the fixing force may be attached to surround the entire electrode assembly. Here, the tap may be taped to fix the full length direction perpendicular to the width direction rather than the width direction of the electrode assembly surrounded by the extension part 41. Alternatively, the tape may be taped to fix only the upper and lower ends of the electrode assembly or surround the entire electrode assembly to be boned.

Furthermore, according to the present invention, the stacking unit has the structure in which the electrode and the separator are bonded to each other, whereas the folding unit has the structure in which the separator and the electrode are not bonded to each other (are movable in a horizontal direction perpendicular to the stacking direction). Thus, in the state in which the stacking unit 200 is stacked on the upper and lower portions of the folding unit 100, an alignment between the folding unit 100 and the stacking unit 20 may be modified before the taping or the whole thermocompression is performed. That is, since the each electrode and the separator are not bonded to each other in the folding unit 100, some movement between the folding unit 100 and the stacking unit 200 may be allowed to be uniformly arranged in the vertical direction after the folding unit 100 and the stacking unit are stacked. This may be a unique advantage of the present invention having the structure in which the stacking unit 200 is stacked in the state in which the folding unit 100 is not fixed.

While the embodiments of the present invention have been described with reference to the specific embodiments, it will be apparent to those skilled in the art that various changes and modifications may be made without departing from the scope of the invention as defined in the following claims.

## Claims

1. An electrode assembly in which a positive electrode (10) and a negative electrode (20) are alternately stacked, and a separator is disposed between the positive electrode and the negative electrode, the electrode assembly comprising:
a folding unit (100) in which a negative electrode unit and a positive electrode unit are alternately inserted between layers of the separator (40) of which one side and the other side are alternately folded in a zigzag shape in a direction perpendicular to a direction in which the positive electrode (10) and the negative electrode (20) are stacked; and
a stacking unit (200) in which the positive electrode (10), the separator (30), and the negative electrode (20), each of which is cut by a predetermined size, are sequentially stacked,
wherein the negative electrode (20) is disposed at the outermost layer of the negative electrode unit, and the positive electrode (10) is disposed at the outermost layer of the positive electrode unit,
the stacking unit (200) is stacked on each of the uppermost layer and the lowermost layer of the folding unit (100),
wherein the negative electrode unit is a bicell in which the negative electrode is stacked at each of both the outermost layers, and one or more positive electrodes (10) are stacked between the negative electrodes (20), and
the positive electrode unit is a bicell in which the positive electrode is stacked at each of both the outermost layers, and one or more negative electrode are stacked between the positive electrodes, and
the separator (40) stacked between the negative electrode unit and the positive electrode unit in the folding unit (100) has a thicker thickness than that of the separator (30) stacked within the stacking unit (200).

2. The electrode assembly of claim 1, wherein the positive electrode, the separator, and the negative electrode, which are stacked in the stacking unit, are bonded to each other at contact surfaces therebetween.

3. The electrode assembly of claim 2, wherein the positive electrode (10), the separator (30), and the negative electrode (20), which are stacked in the stacking unit (200), are bonded to each other by applying heat and a pressure.

4. The electrode assembly of claim 2, wherein, when the stacking unit is stacked on the folding unit, the positive electrode or the negative electrode, which is disposed at the outermost layer of the stacking unit, is a single-sided electrode in which an active material is applied to only one surface of a collector.

5. The electrode assembly of claim 4, wherein, in the single-sided electrode, the active material is applied to a surface contacting the separator (30).

6. The electrode assembly of claim 1, wherein the negative electrode unit is a bicell in which the negative electrode (20)/the separator (30)/the positive electrode (10)/the separator (30)/the negative electrode (20) are stacked sequentially from the outermost layer, and
the positive electrode unit is a bicell in which the positive electrode (10)/the separator (30)/the negative electrode (20)/ the separator (30)/the positive electrode (10) are stacked sequentially from the outermost layer.

7. The electrode assembly of claim 6, wherein the positive electrode, the separator, the negative electrode, which are stacked to constitute each of the negative electrode unit and the positive electrode unit, are bonded to each other at contact surfaces therebetween.

8. The electrode assembly of claim 1, wherein the separator stacked between the negative electrode unit and the positive electrode unit in the folding unit has a thicker thickness from that of the separator stacked within the negative electrode unit and the positive electrode unit.

9. The electrode assembly of any one of claims 1 to 3, wherein, in the stacking unit (200), the separator (30) is stacked at the outermost layer at an opposite side of a direction in which the stacking unit (200) faces the folding unit (100).

10. The electrode assembly of any one of claims 1 to 3, wherein an auxiliary cell in which the positive electrode, the separator, the negative electrode, each of which is cut by a predetermined size, are sequentially stacked is additionally stacked on an outer surface of the stacking unit.

11. The electrode assembly of claim 10, wherein the auxiliary cell has the same stacking structure as the stacking unit (200).

12. The electrode assembly of any one of claims 1 to 3, wherein two or more folding units (100) are continuously stacked between the stacking units (200) disposed at the uppermost layer and the lowermost layer.

13. The electrode assembly of claim 12, wherein the stacking unit (200) in which the positive electrode (10), the separator (30), the negative electrode (20), each of which is cut by a predetermined size, are sequentially stacked is inserted between the two folding units (100) that are continuously stacked.

14. The electrode assembly of any one of claims 1 to 3, wherein, in the folding unit (100), an end of the separator (40) comprises an extension part (41) extending by a predetermined length, and
the extension part (41) surrounds the folding unit (100) and the stacking units (200) after the stacking units are stacked on upper and lower portions of the folding unit, and an end of the extension part is bonded to be fixed to a surface of the folding unit or the stacking unit.

## Patentansprüche

1. Elektrodenanordnung, bei der eine positive Elektrode (10) und eine negative Elektrode (20) abwechselnd gestapelt sind und ein Separator zwischen der positiven Elektrode und der negativen Elektrode angeordnet ist, wobei die Elektrodenanordnung umfasst:
eine Falteinheit (100), bei der eine negative Elektrodeneinheit und eine positive Elektrodeneinheit abwechselnd zwischen Schichten des Separators (40) eingefügt sind, wovon eine Seite und die andere Seite abwechselnd in einer Zickzackform in einer Richtung senkrecht zu einer Richtung gefaltet sind, in der die positive Elektrode (10) und die negative Elektrode (20) gestapelt sind; und
eine Stapeleinheit (200), bei der die positive Elektrode (10), der Separator (30) und die negative Elektrode (20), von denen jede auf eine vorbestimmte Größe zugeschnitten ist, nacheinander gestapelt sind,
wobei die negative Elektrode (20) an der äußersten Schicht der negativen Elektrodeneinheit angeordnet ist, und die positive Elektrode (10) an der äußersten Schicht der positiven Elektrodeneinheit angeordnet ist,
die Stapeleinheit (200) auf jeder der obersten Schicht und der untersten Schicht der Falteinheit (100) gestapelt ist,
wobei die negative Elektrodeneinheit eine Doppelzelle ist, in der die negative Elektrode an jeder der beiden äußersten Schichten gestapelt ist, und eine oder mehrere positive Elektroden (10) zwischen den negativen Elektroden (20) gestapelt sind, und
die positive Elektrodeneinheit eine Doppelzelle ist, in der die positive Elektrode an jeder der beiden äußersten Schichten gestapelt ist, und eine oder mehrere negative Elektroden zwischen den positiven Elektroden gestapelt sind, und
der Separator (40), der zwischen der negativen Elektrodeneinheit und der positiven Elektrodeneinheit in der Falteinheit (100) gestapelt ist, eine größere Dicke aufweist als jene des Separators (30), der innerhalb der Stapeleinheit (200) gestapelt ist.

2. Elektrodenanordnung nach Anspruch 1, wobei die positive Elektrode, der Separator und die negative Elektrode, die in der Stapeleinheit gestapelt sind, an Kontaktoberflächen dazwischen aneinandergebunden sind.

3. Elektrodenanordnung nach Anspruch 2, wobei die positive Elektrode (10), der Separator (30) und die negative Elektrode (20), die in der Stapeleinheit (200) gestapelt sind, durch Anwenden von Wärme und einem Druck aneinandergebunden werden.

4. Elektrodenanordnung nach Anspruch 2, wobei, wenn die Stapeleinheit auf der Falteinheit gestapelt ist, die positive Elektrode oder die negative Elektrode, die an der äußersten Schicht der Stapeleinheit angeordnet ist, eine einseitige Elektrode ist, bei der ein aktives Material nur auf eine Oberfläche eines Kollektors aufgebracht ist.

5. Elektrodenanordnung nach Anspruch 4, wobei bei der einseitigen Elektrode das aktive Material auf eine Oberfläche aufgebracht ist, die den Separator (30) kontaktiert.

6. Elektrodenanordnung nach Anspruch 1, wobei die negative Elektrodeneinheit eine Doppelzelle ist, bei der die negative Elektrode (20)/der Separator (30)/die positive Elektrode (10)/der Separator (30)/die negative Elektrode (20) nacheinander von der äußersten Schicht gestapelt sind, und die positive Elektrodeneinheit eine Doppelzelle ist, bei der die positive Elektrode (10)/der Separator (30)/die negative Elektrode (20)/der Separator (30)/die positive Elektrode (10) nacheinander von der äußersten Schicht gestapelt sind.

7. Elektrodenanordnung nach Anspruch 6, wobei die positive Elektrode, der Separator, die negative Elektrode, die gestapelt sind, um jede von der negativen Elektrodeneinheit und der positiven Elektrodeneinheit zu bilden, an Kontaktoberflächen dazwischen aneinandergebunden sind.

8. Elektrodenanordnung nach Anspruch 1, wobei der Separator, der zwischen der negativen Elektrodeneinheit und der positiven Elektrodeneinheit in der Falteinheit gestapelt ist, eine größere Dicke aufweist als jene des Separators, der innerhalb der negativen Elektrodeneinheit und der positiven Elektrodeneinheit gestapelt ist.

9. Elektrodenanordnung nach einem der Ansprüche 1 bis 3, wobei in der Stapeleinheit (200) der Separator (30) an der äußersten Schicht auf einer entgegengesetzten Seite einer Richtung gestapelt ist, in der die Stapeleinheit (200) der Falteinheit (100) zugewandt ist.

10. Elektrodenanordnung nach einem der Ansprüche 1 bis 3, wobei eine Hilfszelle, bei der die positive Elektrode, der Separator, die negative Elektrode, von denen jede auf eine vorbestimmte Größe zugeschnitten ist, nacheinander gestapelt sind, zusätzlich auf einer Außenoberfläche der Stapeleinheit gestapelt ist.

11. Elektrodenanordnung nach Anspruch 10, wobei die Hilfszelle die gleiche Stapelstruktur wie die Stapeleinheit (200) aufweist.

12. Elektrodenanordnung nach einem der Ansprüche 1 bis 3, wobei zwei oder mehr Falteinheiten (100) kontinuierlich zwischen den Stapeleinheiten (200) gestapelt sind, die an der obersten Schicht und der untersten Schicht angeordnet sind.

13. Elektrodenanordnung nach Anspruch 12, wobei die Stapeleinheit (200), bei der die positive Elektrode (10), der Separator (30), die negative Elektrode (20), von denen jede auf eine vorbestimmte Größe zugeschnitten ist, nacheinander gestapelt sind, zwischen den beiden Falteinheiten (100) eingefügt ist, die kontinuierlich gestapelt sind.

14. Elektrodenanordnung nach einem der Ansprüche 1 bis 3, wobei in der Falteinheit (100) ein Ende des Separators (40) einen Verlängerungsteil (41) umfasst, der sich um eine vorbestimmte Länge erstreckt, und
der Verlängerungsteil (41) die Falteinheit (100) und die Stapeleinheiten (200) umgibt, nachdem die Stapeleinheiten auf oberen und unteren Abschnitten der Falteinheit gestapelt worden sind, und ein Ende des Verlängerungsteils gebunden wird, um an einer Oberfläche der Falteinheit oder der Stapeleinheit fixiert zu werden.

## Revendications

1. Ensemble d'électrodes dans lequel une électrode positive (10) et une électrode négative (20) sont empilées en alternance, et un séparateur est disposé entre l'électrode positive et l'électrode négative, l'ensemble d'électrodes comprenant :
une unité de pliage (100) dans laquelle une unité d'électrode négative et une unité d'électrode positive sont insérées en alternance entre des couches du séparateur (40) dont un côté et l'autre côté sont pliés en alternance en forme de zigzag dans une direction perpendiculaire à une direction selon laquelle l'électrode positive (10) et l'électrode négative (20) sont empilées ; et
une unité d'empilement (200) dans laquelle l'électrode positive (10), le séparateur (30), et l'électrode négative (20), chacun étant découpé selon une taille prédéterminée, sont empilés séquentiellement,
dans lequel l'électrode négative (20) est disposée au niveau de la couche la plus externe de l'unité d'électrode négative, et l'électrode positive (10) est disposée au niveau de la couche la plus externe de l'unité d'électrode positive,
l'unité d'empilement (200) est empilée sur chacune de la couche la plus haute et de la couche la plus basse de l'unité de pliage (100),
dans lequel l'unité d'électrode négative est une bi-cellule dans laquelle l'électrode négative est empilée au niveau de chacune des deux couches les plus externes, et une ou plusieurs électrodes positives (10) sont empilées entre les électrodes négatives (20), et
l'unité d'électrode positive est une bi-cellule dans laquelle l'électrode positive est empilée au niveau de chacune des deux couches les plus externes, et une ou plusieurs électrodes négatives sont empilées entre les électrodes positives, et
le séparateur (40) empilé entre l'unité d'électrode négative et l'unité d'électrode positive dans l'unité de pliage (100) a une épaisseur plus grande que celle du séparateur (30) empilé à l'intérieur de l'unité d'empilement (200).

2. Ensemble d'électrodes selon la revendication 1, dans lequel l'électrode positive, le séparateur et l'électrode négative, qui sont empilés dans l'unité d'empilement, sont liés les uns aux autres au niveau de surfaces de contact situées entre eux.

3. Ensemble d'électrodes selon la revendication 2, dans lequel l'électrode positive (10), le séparateur (30) et l'électrode négative (20), qui sont empilés dans l'unité d'empilement (200), sont liés les uns aux autres par application de chaleur et d'une pression.

4. Ensemble d'électrodes selon la revendication 2, dans lequel, lorsque l'unité d'empilement est empilée sur l'unité de pliage, l'électrode positive ou l'électrode négative, qui est disposée au niveau de la couche la plus externe de l'unité d'empilement, est une électrode simple face dans laquelle une matière active est appliquée sur une seule surface d'un collecteur.

5. Ensemble d'électrodes selon la revendication 4, dans lequel, dans l'électrode simple face, la matière active est appliquée sur une surface en contact avec le séparateur (30).

6. Ensemble d'électrodes selon la revendication 1, dans lequel l'unité d'électrode négative est une bi-cellule dans laquelle l'électrode négative (20)/le séparateur (30)/l'électrode positive (10)/le séparateur (30)/l'électrode négative (20) sont empilés séquentiellement depuis la couche la plus externe, et l'unité d'électrode positive est une bi-cellule dans laquelle l'électrode positive (10)/le séparateur (30)/l'électrode négative (20)/le séparateur (30)/l'électrode positive (10) sont empilés séquentiellement depuis la couche la plus externe.

7. Ensemble d'électrodes selon la revendication 6, dans lequel l'électrode positive, le séparateur, l'électrode négative, qui sont empilés pour constituer chacune de l'unité d'électrode négative et de l'unité d'électrode positive, sont liés les uns aux autres au niveau de surfaces de contact situées entre eux.

8. Ensemble d'électrodes selon la revendication 1, dans lequel le séparateur empilé entre l'unité d'électrode négative et l'unité d'électrode positive dans l'unité de pliage a une épaisseur plus grande que celle du séparateur empilé à l'intérieur de l'unité d'électrode négative et de l'unité d'électrode positive.

9. Ensemble d'électrodes selon l'une quelconque des revendications 1 à 3, dans lequel, dans l'unité d'empilement (200), le séparateur (30) est empilé au niveau de la couche la plus externe sur un côté opposé à une direction dans laquelle l'unité d'empilement (200) fait face à l'unité de pliage (100).

10. Ensemble d'électrodes selon l'une quelconque des revendications 1 à 3, dans lequel une cellule auxiliaire dans laquelle l'électrode positive, le séparateur, l'électrode négative, chacun étant découpé selon une taille prédéterminée, sont empilés séquentiellement, est empilée additionnellement sur une surface externe de l'unité d'empilement.

11. Ensemble d'électrodes selon la revendication 10, dans lequel la cellule auxiliaire a la même structure d'empilement que l'unité d'empilement (200).

12. Ensemble d'électrodes selon l'une quelconque des revendications 1 à 3, dans lequel deux unités de pliage (100) ou plus sont empilées en continu entre les unités d'empilement (200) disposées au niveau de la couche la plus haute et de la couche la plus basse.

13. Ensemble d'électrodes selon la revendication 12, dans lequel l'unité d'empilement (200) dans laquelle l'électrode positive (10), le séparateur (30), l'électrode négative (20), chacun étant découpé selon une taille prédéterminée, sont empilés séquentiellement, est insérée entre les deux unités de pliage (100) qui sont empilées en continu.

14. Ensemble d'électrodes selon l'une quelconque des revendications 1 à 3, dans lequel, dans l'unité de pliage (100), une extrémité du séparateur (40) comprend une partie d'extension (41) s'étendant sur une longueur prédéterminée, et la partie d'extension (41) entoure l'unité de pliage (100) et les unités d'empilement (200) après que les unités d'empilement sont empilées sur des portions supérieures et inférieures de l'unité de pliage, et une extrémité de la partie d'extension est liée pour être fixée à une surface de l'unité de pliage ou de l'unité d'empilement.
